# EUROPÄISCHE PATENTANMELDUNG

(11) **EP 0 892 205 A1**
(43) Veröffentlichungstag der Anmeldung: **20.01.1999**
(21) Anmeldenummer: 98890192.2
(22) Anmeldetag: 01.07.1998
(51) Int. Cl.: F16K 47/02, F16K 15/04

(54) **Ventil**

(30) Priorität: 16.07.1997 AT 1210/97
(71) Anmelder: HOERBIGER GmbH, 86956 Schongau (DE)
(72) Erfinder: Hollerbach, Bernhard, 86989 Steingaden (DE)
(74) Vertreter: Pinter, Rudolf, Dipl.-Ing.

(57) **Zusammenfassung**

Bei einem Ventil, mit einem mittels eines Federelementes (1) auf einen Sitz (2) gepreßten Schließkörper (3) ist zur Verhinderung von Flatter-schwingungen des Schließkörpers (3) zwischen Federelement (1) und Schließkörper (3) ein Dämpfungselement (5) angeordnet, welches beispielsweise in Form eines Federtellers (6) ausgebildet sein kann und bevorzugt aus Gummi besteht.

## Beschreibung

Die Erfindung betrifft ein Ventil, mit einem mittels eines Federelementes auf einen Sitz gepreßten Schließkörper.

Derartige Ventile werden oft auch als Vorspannventile bezeichnet und dienen beispielsweise in Form von Rückschlagventilen zur Verhinderung unerwünschter Rückflüsse von Druckmedium bzw. etwa in Form von Druckbegrenzungsventilen zur Begrenzung des Systeminnendruckes auf einen über die Federvorspannung oft auch einstellbaren Grenzwert. Darüber hinaus sind vielfältigste Anwendungen derartiger einfacher Ventile möglich und bekannt.

Für verschiedene Anwendungen als nachteilig herausgestellt hat sich insbesonders der Umstand, daß das System aus Feder, Schließkörper und Sitz speziell bei Systemdrücken im Bereich des Öffnungsdruckes des Ventils leicht zum Schwingen neigt, was insbesonders durch allfällige Pulsationen des Systemdruckes noch verstärkt wird und zu oft als unangenehm empfundenen und darüber hinaus alle beteiligten Bauteile unnötig belastenden Geräuschen, herrührend von einem Flattern zwischen Schließkörper und Sitz, führt.

Aufgabe der vorliegenden Erfindung ist es, ein Ventil der eingangs genannten Art so zu verbessern, daß auf einfache Weise die beschriebenen Nachteile vermieden werden können, und daß insbesonders das unerwünschte Flattern zufolge elastischer Schwingungen im Ventil zuverlässig und ohne besonderen zusätzlichen Aufwand beseitigt wird.

Diese Aufgabe wird bei einem Ventil der eingangs genannten Art gemäß der vorliegenden Erfindung dadurch gelöst, daß zwischen Federelement und Schließkörper ein Dämpfungselement angeordnet ist. Damit kann das unter gewissen Voraussetzungen zu elastischen Schwingungen neigende System aus Federelement, Schließkörper und Sitz des Ventils sehr einfach und wirkungsvoll bedämpft werden, wobei keine besonders kritischen Anforderungen an das Dämpfungselement zu stellen sind, da ja üblicherweise zufolge der verwendeten Komponenten bzw. der systembedingt auftretenden Druckschwingungen nur einzelne Frequenzbereiche wirksam bedämpft werden müssen um die erwähnten Ventilgeräusche zuverlässig auszuschalten.

In besonders bevorzugter Ausgestaltung der Erfindung ist das Dämpfungselement in Form eines Federtellers ausgebildet, welcher einerseits mit dem Federelement und andererseits mit dem Schließelement in direkter Verbindung steht. Damit sind für die erfindungsgemäße Ausbildung überhaupt keine zusätzlichen Komponenten erforderlich - lediglich der Federteller ist über Material und/oder Konstruktion so auszubilden, daß die unerwünschten Frequenzen in den beweglichen Teilen des Ventils entsprechend bedämpft werden.

Nach einer anderen vorteilhaften Ausgestaltung der Erfindung kann das Dämpfungselement aber auch als Zwischenlage zwischen Federelement und Federteller bzw. Federteller und Schließelement ausgebildet sein, was eine für verschiedene Anwendung erwünschte Trennung der Funktionen von Federteller einerseits und Dämpfungselement andererseits ermöglicht und beispielsweise auch das nachträgliche Ausrüsten von Ventilen mit derartigen Dämpfungselementen zur Verbesserung ihrer Funktion einfach ermöglicht.

Das Dämpfungselement kann in besonders bevorzugter weiterer Ausgestaltung der Erfindung aus Gummi oder hinsichtlich seiner Dämpfungseigenschaften ähnlichem Kunststoff bestehen. Über die konkrete Werkstoffauswahl bzw. die konstruktive Ausbildung des Dämpfungselementes kann damit in weiten Grenzen den beschriebenen unerwünschten Schwingungen im System entgegengetreten werden, wobei als weiters positiv zum Tragen kommt, daß die als vorteilhaft beschriebenen Werkstoffe unkompliziert und kostengünstig sind und sich auch einfach bearbeiten lassen.

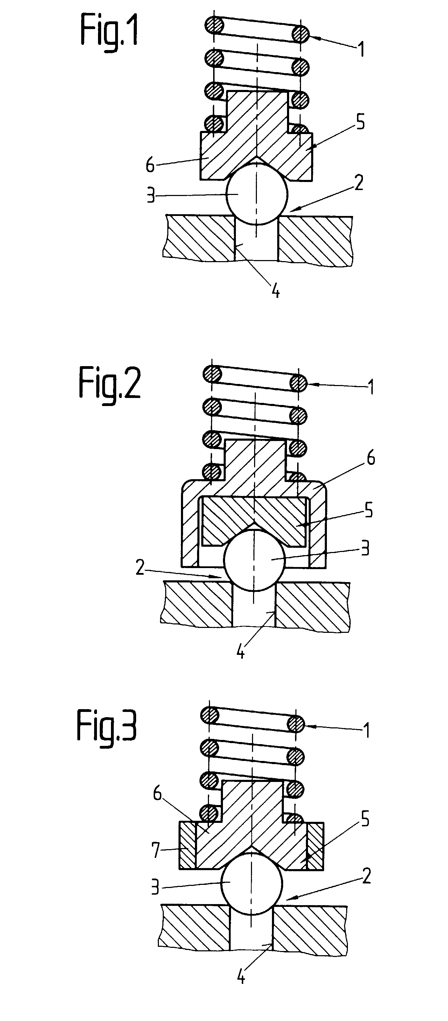

Die Erfindung wird im folgenden noch anhand der in der Zeichnung in den Fig. 1 bis 3 schematisch dargestellten Ausführungsbeispielen näher erläutert.

Bei allen drei dargestellten Ausführungsbeispielen weist das in seiner Gesamtheit nicht näher dargestellte Ventil einen mittels eines Federelementes 1 auf einen Sitz 2 gepreßten Schließkörper 3 auf, womit in der Darstellung von unten her durch die Sitzbohrung 4 anstehendes Druckmedium (beispielsweise Hydraulikmedium) durch den hier kugelförmigen Schließkörper 3 am Durchströmen des ringförmigen Sitzes 2 gehindert wird, solange die über das Federelement 1 auf den Schließkörper 3 ausgeübte Kraft entsprechend hoch ist. Sobald die über den Mediumdruck und die Querschnittsfläche der Sitzbohrung 4 bzw. des Sitzes 2 gegebene, auf den Schließkörper 3 von in der Darstellung unten her wirkende Kraft größer wird als die vom Federelement 1 von in der Darstellung oben her wirkende Kraft, hebt der Schließkörper 3 vom Sitz 2 ab und ermöglicht ein Durchströmen bzw. Ausströmen des Druckmediums.

Zufolge der praktisch ungedämpften Elastizität des Federelementes 1 (hier ausgebildet als Schraubenfeder - möglich wären aber beliebige elastische Elemente, wie etwa Blattfedern, pneumatische Elemente, Magnetelemente, oder dergleichen) kann es bei bestimmten Innendruckverhältnissen bzw. Innendruckschwankungen oder dergleichen zu einem Flattern des Schließkörpers 3 relativ zum Sitz 2 kommen, was bedeutet, daß der Schließkörper 3 mit bestimmter Frequenz den Ventilsitz 2 nur immer knapp frei gibt und dann sofort wieder (unter entsprechender Geräuschentwicklung) schließt. Um diese unerwünschten Betriebszustände hintanzuhalten, ist nun hier in allen drei Ausführungen zwischen Federelement 1 und Schließkörper 3 ein Dämpfungselement 5 angeordnet, welches in den Fällen der Fig. 1 und 3 selbst in Form eines Federtellers 6 ausgebildet ist, der einerseits mit dem Federelement 1 und andererseits mit dem Schließelement 3 in direkter Verbindung steht. Im Falle der Ausführung nach Fig. 2 ist das Dämpfungselement 5 als Zwischenlage zwischen einem beispielsweise aus Aluminium bestehenden topfförmigen Federteller 6 und dem Schließelement 3 ausgebildet, womit bedarfsweise auch bestehende Ventilkonstruktionen entsprechend leicht nachgerüstet werden können.

Die Dämpfungselemente 5 bestehen in allen Fällen aus Gummi oder einem hinsichtlich seiner Dämpfungseigenschaften ähnlichen Kunststoff, wobei bei der Ausführung nach Fig. 1 der als Dämpfungselement 5 wirkende Federteller 6 überhaupt das einzige Element zwischen Federelement 1 und Schließkörper 3 ist. Gemäß Fig. 3 ist das Dämpfungselement 5 in einem zweiteiligen Federteller 6 verwirklicht, der außen über dem Gummi bzw. Kunststoff des Dämpfungselementes 5 noch einen Ring 7 beispielsweise aus Aluminium trägt, der das Material des Dämpfungselementes schützt.

Abgesehen von den dargestellten und besprochenen Ausführungsformen sind natürlich weitere entsprechende Ausgestaltungen bzw. Abwandlungen denkbar, soferne nur das wesentliche Merkmal der Ausbildung nach der vorliegenden Erfindung verwirklicht ist, nämlich daß im elastischen, federnden System des Ventils zwischen Federelement 1 und Schließkörper 3 ein Dämpfungselement 5 zur Bedämpfung der Flatterschwingungen angeordnet ist, womit unerwünschte Geräusche bzw. Belastungen der zusammenwirkenden Komponenten vermieden werden.

## Patentansprüche

1. Ventil, mit einem mittels eines Federelementes (1) auf einen Sitz (2) gepreßten Schließkörper (3), **dadurch gekennzeichnet**, daß zwischen Federelement (1) und Schließkörper (3) ein Dämpfungselement (5) angeordnet ist.

2. Ventil nach Anspruch 1, dadurch gekennzeichnet, daß das Dämpfungselement (5) in Form eines Federtellers (6) ausgebildet ist, welcher einerseits mit dem Federelement (1) und andererseits mit dem Schließelement (3) in direkter Verbindung steht,

3. Ventil nach Anspruch 1, dadurch gekennzeichnet, daß das Dämpfungselement (5) als Zwischenlage zwischen Federelement (1) und Federteller (6) bzw. Federteller (6) und Schließelement (3) ausgebildet ist.

4. Ventil nach einem oder mehreren der Ansprüche 1 bis 3, dadurch gekennzeichnet, daß das Dämpfungselement (5) aus Gummi oder hinsichtlich seiner Dämpfungseigenschaften ähnlichem Kunststoff besteht.
